# EUROPEAN PATENT APPLICATION

(11) **EP 4 772 784 A1**
(43) Date of publication of application: **08.07.2026**
(21) Application number: 25226873.5
(22) Date of filing: 23.12.2025
(51) Int. Cl.: F16L 25/00, F16L 21/06, F16L 33/00, F16L 33/23

(54) **FITTING FOR CORRUGATED PIPES**

(30) Priority: 03.01.2025 IT 202500000012
(71) Applicant: EUROTIS S.r.l., 20094 Corsico, MI (IT)
(72) Inventor: FRANCHI, Andrea Luigi, 20081 ABBIATEGRASSO MI (IT)
(74) Representative: Modiano, Micaela Nadia

(57) **Abstract**

A fitting (1) for corrugated pipes, which comprises a pair of half-sleeves (2, 3) which are adapted to be coupled around at least one end of a corrugated pipe (4), for coupling two portions of corrugated pipe (4) or for coupling the end of a corrugated pipe (4) to an additional fitting (12, 13), the half-sleeves (2, 3) being each provided with a pair of flanges (9) which are adapted to mate and to be clamped together by virtue of clamping means (20, 21), in order to clamp the half-sleeves (2, 3) around the respective ends of the two portions of corrugated pipe (4) or around one end of the corrugated pipe (4) and around the additional fitting (12, 13).

## Description

The present invention relates to a fitting for corrugated pipes.

More specifically, the present invention relates to a fitting for corrugated pipes, for example made of steel.

To connect two portions of corrugated pipe to each other, it is necessary to have a nipple and a system for coupling between the corrugated pipe and the nipple.

A similar situation arises when it is necessary to connect the end of a corrugated pipe to a male nipple or a female nipple.

The systems described above require special equipment for the connection between two portions of corrugated pipe or between a corrugated pipe and a nipple, with male or female thread.

The aim of the present invention is to provide a fitting for corrugated pipes that can be applied to the pipe without special equipment.

Within this aim, an object of the present invention is to provide a fitting for corrugated pipes that can be coupled to the pipe and optionally also to a nipple, solely by tightening a pair of screws with nuts.

Another object of the present invention is to provide a fitting for corrugated pipes that can be provided in different sizes to cater for different connection requirements.

Not least an object of the present invention is to provide a fitting for corrugated pipes that is highly reliable, easily and practically implemented and low cost.

This aim and these and other objects which will become more apparent hereinafter are achieved by a fitting for corrugated pipes, characterized in that it comprises a pair of half-sleeves which are adapted to be coupled around at least one end of a corrugated pipe, for coupling two portions of corrugated pipe to each other or for coupling said end of a corrugated pipe to an additional fitting, said half-sleeves being each provided with a pair of flanges which are adapted to mate together and to be clamped together by virtue of clamping means, in order to clamp said half-sleeves around the respective ends of the two portions of corrugated pipe or around one end of said corrugated pipe and around said additional fitting.

Further characteristics and advantages of the invention will become more apparent from the description of preferred, but not exclusive, embodiments of the fitting for corrugated pipes according to the invention, illustrated by way of non-limiting example in the accompanying drawings wherein:
Figure 1 is an exploded perspective view of a first embodiment of the fitting according to the present invention;
Figure 2 is an exploded perspective view of a second embodiment of the fitting according to the present invention, which differs from the first embodiment only in size;
Figure 3 is a perspective view of a first embodiment of a gasket of the fitting according to the present invention;
Figure 3a is a transverse cross-sectional view of the gasket of the Figure 3;
Figure 4 is a perspective view of a second embodiment of a gasket of the fitting according to the present invention, which differs from the first embodiment only in size;
Figure 4a is a transverse cross-sectional view of the gasket of the Figure 4;
Figure 5 is an exploded perspective view of the coupling of the fitting according to the present invention, of Figures 2 and 3, 3a, to two portions of corrugated pipe;
Figure 6 is a cutaway perspective view of the coupling of Figure 6;
Figure 7 is a perspective view of the coupling of Figures 5 and 6;
Figure 8 is a perspective view of a female nipple for use with the fitting according to the present invention;
Figure 8a is a transverse cross-sectional view of the female nipple of Figure 8;
Figure 9 is a perspective view of a male nipple for use with the fitting according to the present invention;
Figure 9a is a transverse cross-sectional view of the male nipple of Figure 9;
Figure 10 is an exploded perspective view of the coupling of the fitting according to the present invention to a portion of corrugated pipe and to a female nipple according to the present invention;
Figure 11 is a cutaway perspective view of the coupling of Figure 10;
Figure 12 is a perspective view of the coupling of Figures 10 and 11;
Figure 13 is an exploded perspective view of the coupling of the fitting according to the present invention to a portion of corrugated pipe and to a male nipple according to the present invention;
Figure 14 is a cutaway perspective view of the coupling of Figure 13;
Figure 15 is a perspective view of the coupling of Figures 13 and 14.

With reference to the figures, the fitting for corrugated pipes according to the present invention, generally designated by the reference numeral 1, comprises a pair of half-sleeves 2 and 3 which are adapted to be coupled to the end of a corrugated pipe 4 following the interposition of a gasket 5.

Conveniently, the half-sleeves 2 and 3 are provided with two lips 6 and 7, upper and lower, which are adapted to be coupled with grooves 8 of the corrugated pipe 4.

The two half-sleeves 2, 3 are therefore substantially C-shaped in transverse cross-section.

The two half-sleeves 2, 3 have a semicircular profile visible in plan view and are such as to encompass the corrugated pipe 4 substantially completely, leaving a sufficient space between them to allow the two half-sleeves to be tightened around the corrugated pipe 4.

Furthermore, the two half-sleeves 2 and 3 are each provided with a pair of flanges 9 with respective holes 10 which are adapted to receive locking screws with nuts, in order to clamp the two half-sleeves 2 and 3 around the corrugated pipe 4 which is advantageously a steel pipe.

The cylindrical gasket 5 is provided with an inner circumferential rib 11 which is adapted to engage in one of the grooves 8 of the corrugated pipe 4.

The gasket 5 is adapted to be fitted over the corrugated pipe 4.

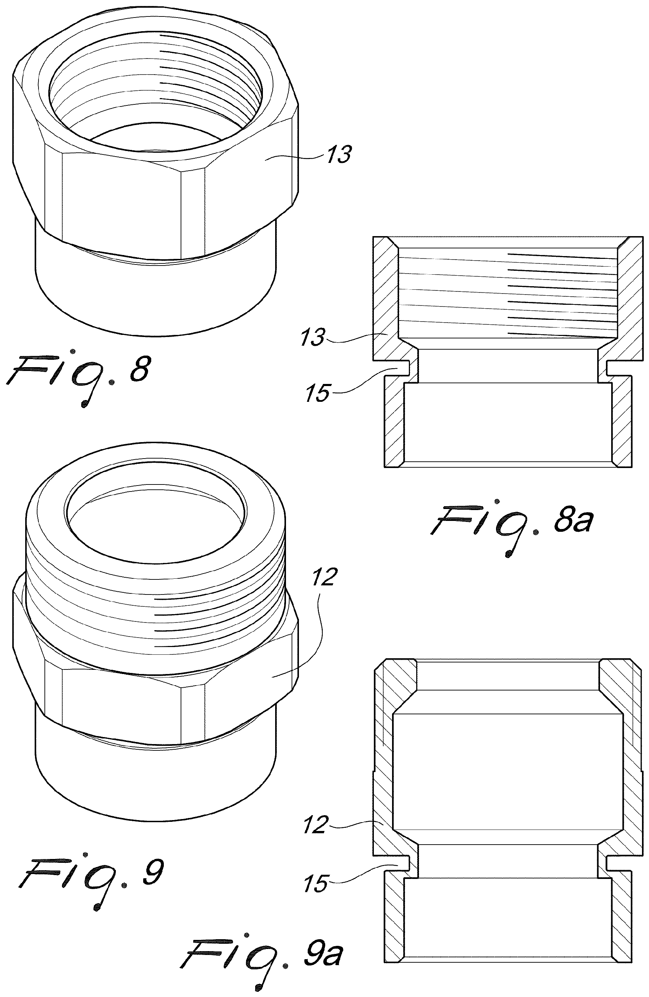

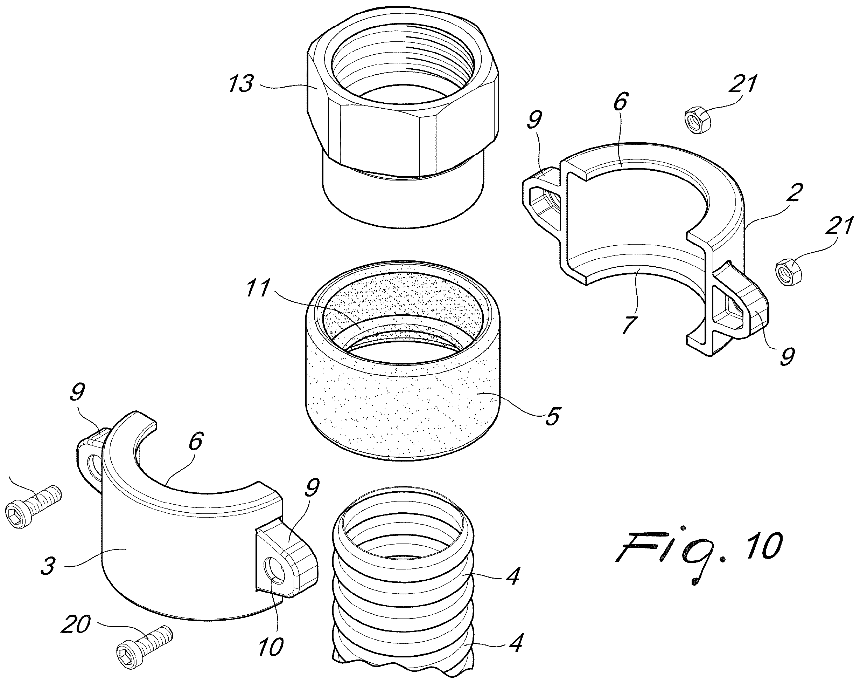

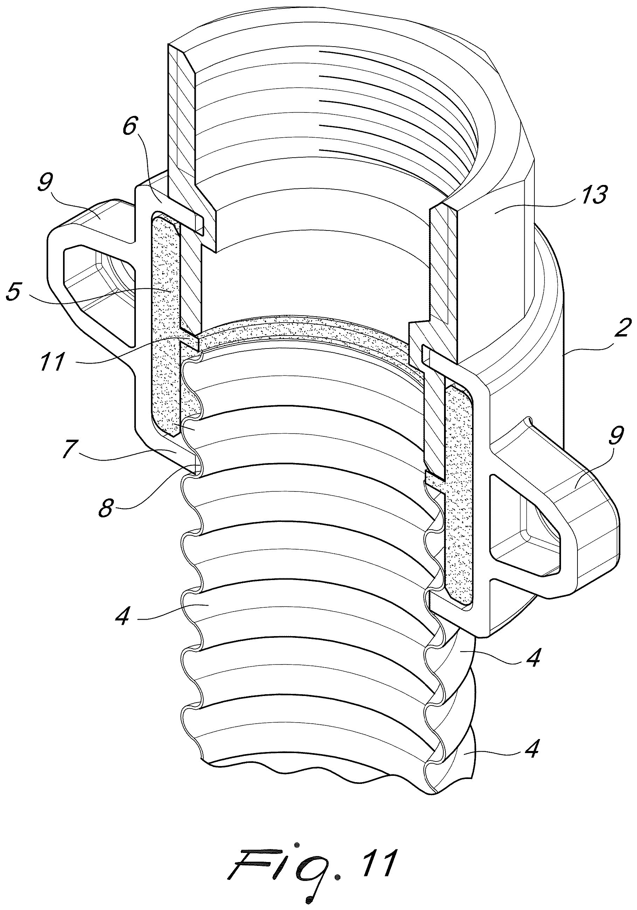

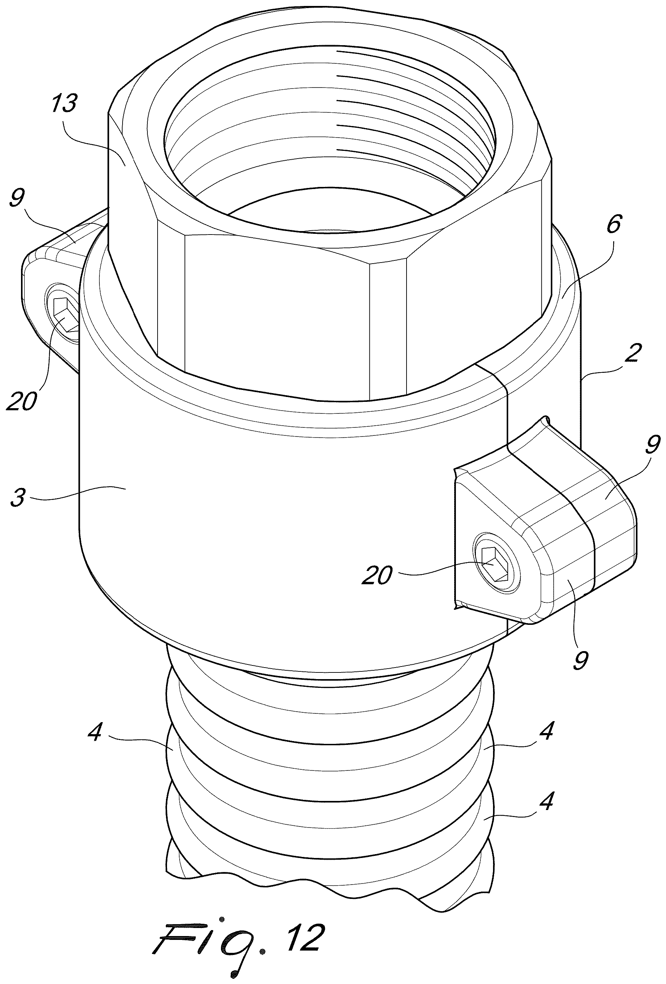

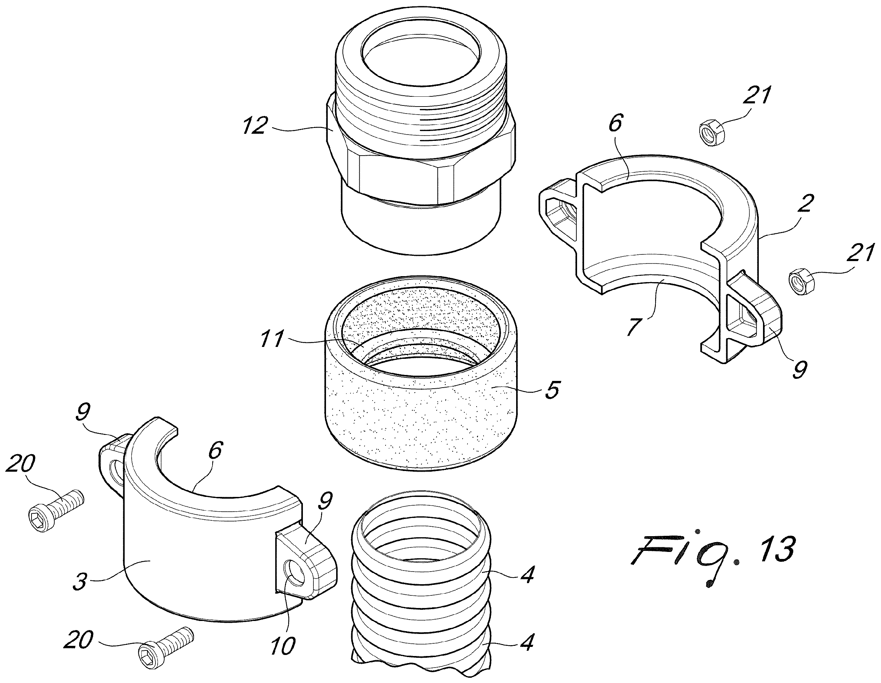

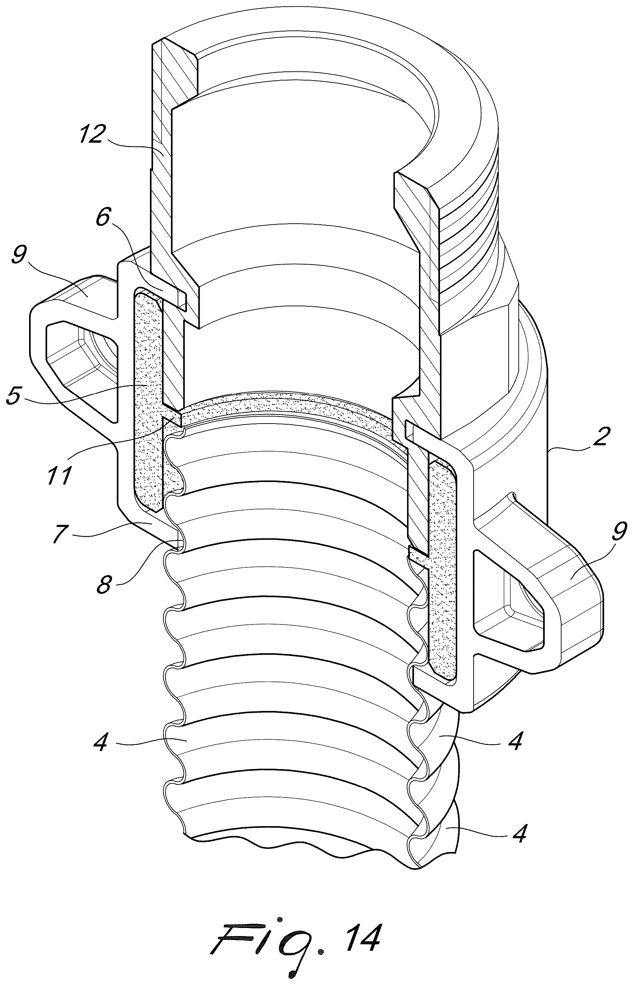

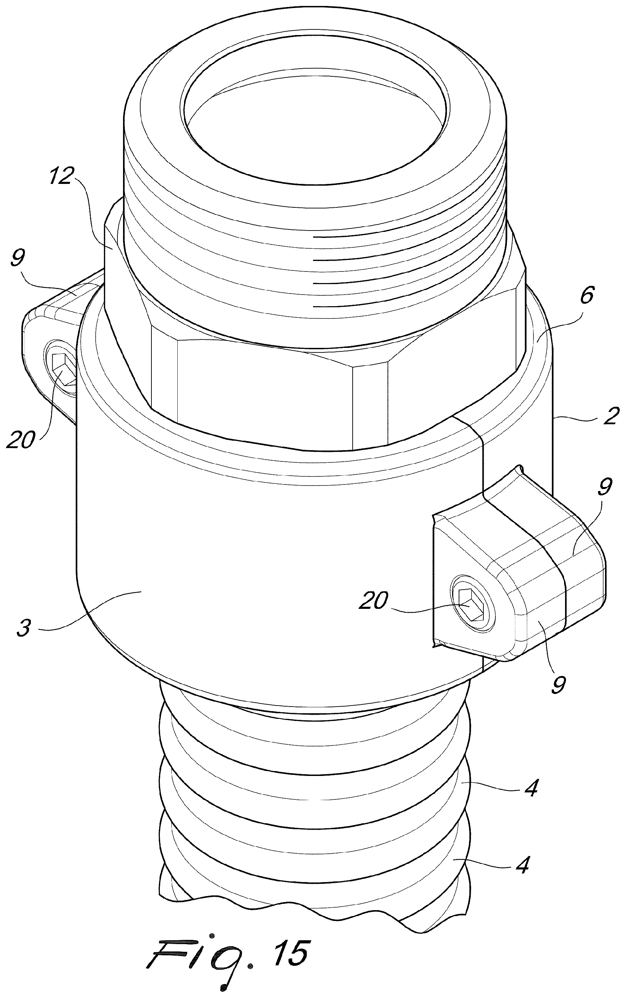

The fitting according to the invention can also be used to connect the end of the corrugated pipe 4 to an additional fitting, such as for example a male nipple 12 or female nipple 13 (see Figures 8-15).

The additional fitting, such as for example a nipple 12, 13, either male or female, is conveniently provided with an outer circumferential recess 15 which reproduces the groove 8 of the corrugated pipe 4.

The use of the fitting according to the present invention is as follows.

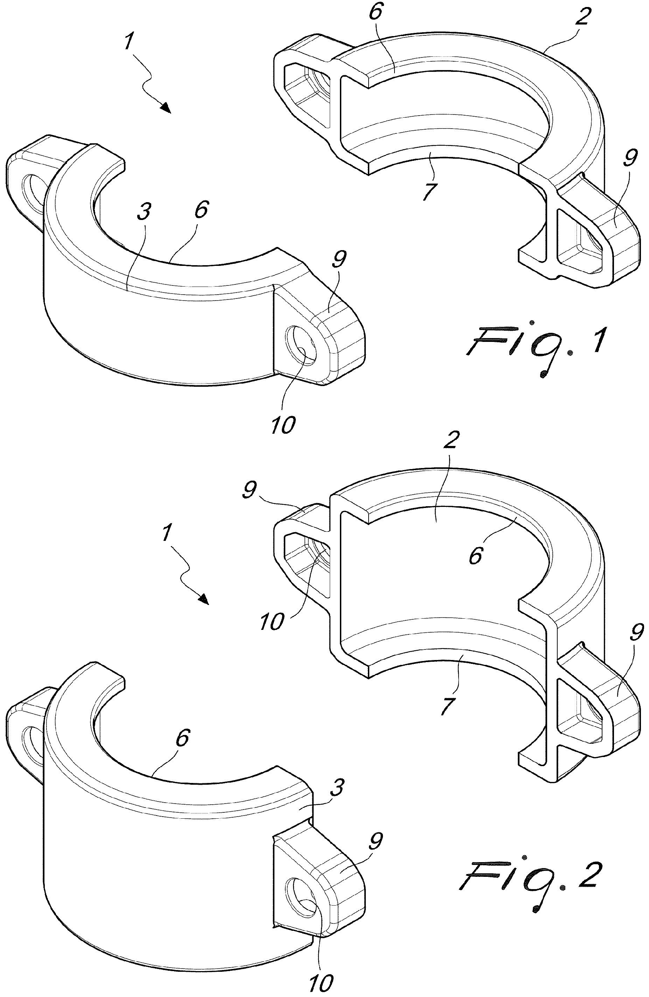

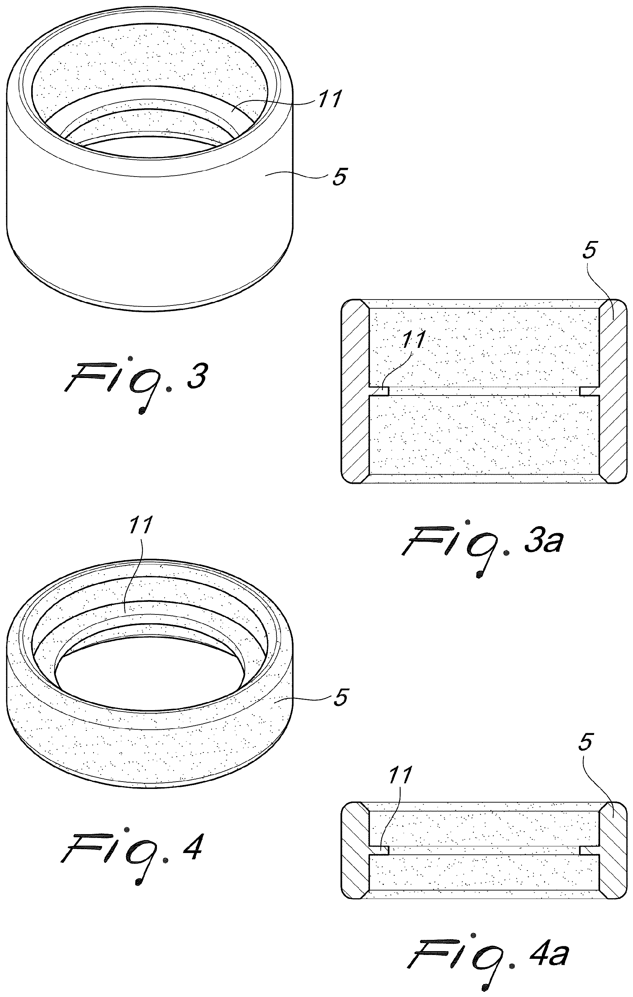

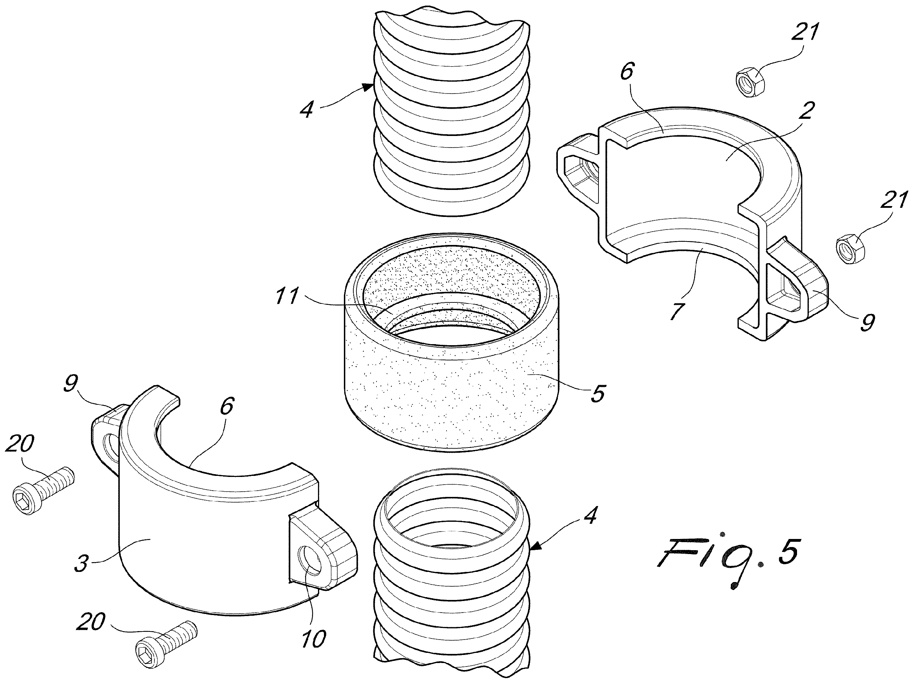

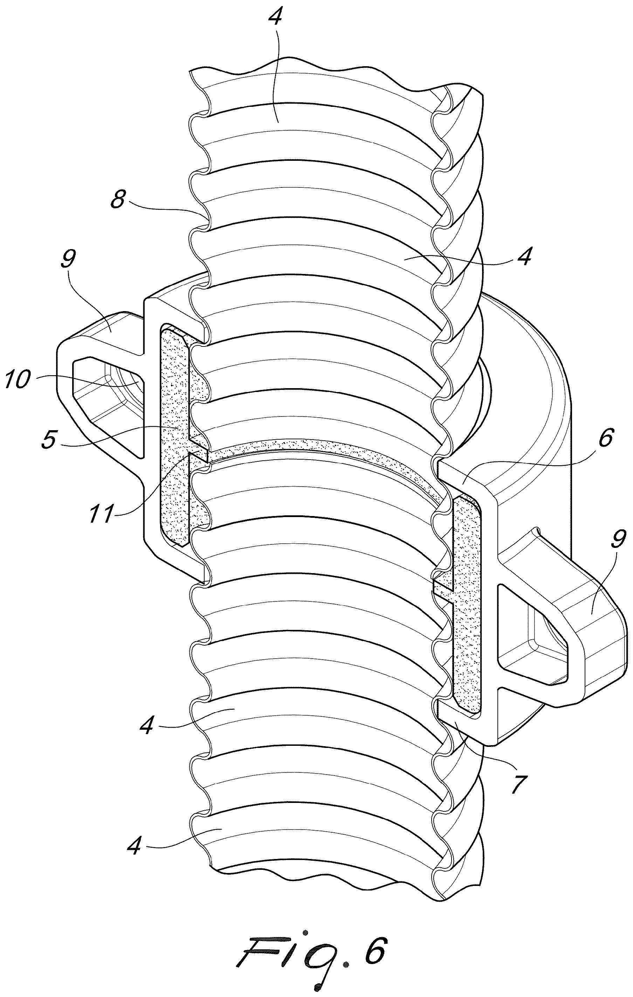

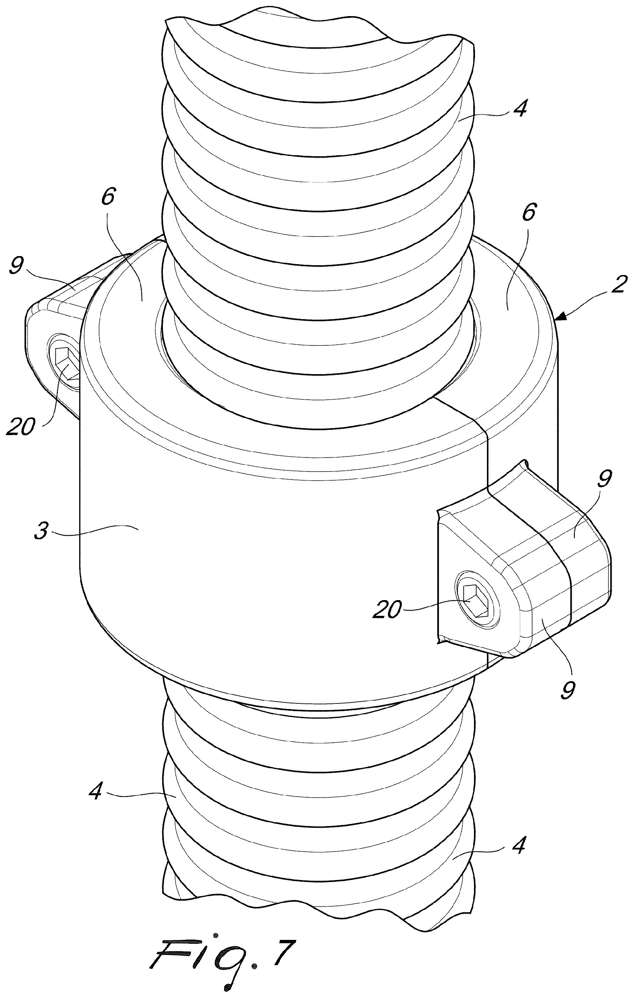

The technician who wishes to couple two portions of corrugated pipe 4 (see Figures 1-7) proceeds to fit the gasket 5 over the ends of the two portions of pipe 4 so that it is arranged astride the two ends of the pipes 4 and so that the circumferential rib 11 comes to be engaged in one of the grooves 8 of the corrugated pipe 4.

Subsequently the operator couples the two half-sleeves 2 and 3 around the corrugated pipe 4, so that the two respective lips 6 and 7 come to be engaged in respective grooves 8 of the portions of pipe 4.

The coupling of the two half-sleeves 2 and 3 ensures that the flanges 9 of one half-sleeve abut against the flanges 9 of the other half-sleeve, so that the technician can tighten the flanges 9 together by means of clamping means such as for example screws 20 and nuts 21.

In this manner the flanges 9 are clamped around the two portions of corrugated pipe 4, so providing a solid and long-lasting connection of the two portions of corrugated pipe 4.

In this configuration the upper lip 6 of the two half-sleeves 2, 3 engages in a groove 8 of a portion of corrugated pipe 4 while the lower lip 7 engages in a groove 8 of the other portion of corrugated pipe.

On the other hand, if the technician wishes to couple the end of the corrugated pipe 4 to an additional fitting, such as a male nipple or female nipple 12, 13 (Figures 8-15), it is necessary to couple the corrugated pipe 4 to the nipple 12, 13, following insertion of the gasket 5, and then to arrange the two half-sleeves 2, 3 around the corrugated pipe 4, encompassing both the pipe and the nipple, in substance arranging the two half-sleeves to straddle the pipe and the nipple and then tightening them as explained previously to couple the two portions of corrugated pipe.

In this case the upper lip 6 of the two half-sleeves 2, 3 is engaged in the recess 15 of the nipple while the lower lip 7 is engaged in a groove 8 of the corrugated pipe.

In practice it has been found that the fitting for corrugated pipes according to the present invention fully achieves the set aim and objects, in that it enables a rapid coupling between two portions of corrugated pipe or between a corrugated pipe and an additional fitting, without the need for special equipment.

Moreover, all the details may be substituted by other, technically equivalent elements.

In practice, the materials used, as well as the contingent shapes and dimensions, may be any according to the requirements and to the state of the art.

The disclosures in Italian Patent Application No. 102025000000012 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A fitting (1) for corrugated pipes, **characterized in that** it comprises a pair of half-sleeves (2, 3) which are adapted to be coupled around at least one end of a corrugated pipe (4), for coupling two portions of corrugated pipe (4) or for coupling said end of a corrugated pipe (4) to an additional fitting (12, 13), said half-sleeves (2, 3) being each provided with a pair of flanges (9) which are adapted to mate and to be clamped together by virtue of clamping means (20, 21), in order to clamp said half-sleeves (2, 3) around the respective ends of the two portions of corrugated pipe (4) or around one end of said corrugated pipe and around said additional fitting (12, 13).

2. The fitting according to claim 1, **characterized in that** it comprises a gasket (5) adapted to be fitted over said corrugated pipe (4) and adapted to be clamped around said corrugated pipe (4) by means of said half-sleeves (2, 3).

3. The fitting according to claim 1, **characterized in that** said half-sleeves (2, 3) are each provided with two lips (6, 7) which are configured to engage in respective grooves (8) of said corrugated pipe (4) and/or of said additional fitting (12, 13).

4. The fitting according to one or more of the preceding claims, **characterized in that** said gasket (5) is a cylindrical gasket having an inner circumferential rib (11), said rib (11) being configured to engage in a groove (8) of said corrugated pipe (4).

5. The fitting according to one or more of the preceding claims, **characterized in that** said clamping means (20, 21) comprise screws (20) and respective nuts (21).

6. The fitting according to one or more of the preceding claims, **characterized in that** said lips (6, 7) of said half-sleeves (2, 3) are configured to engage in a recess (15) of said additional fitting (12, 13).

7. The fitting according to one or more of the preceding claims, **characterized in that** said flanges (9) of said half-sleeves (2, 3) are each provided with a hole (10) for the passage of said clamping means (20, 21).

8. The fitting according to one or more of the preceding claims, **characterized in that** said half-sleeves (2, 3) have a C-shaped profile in transverse cross-section.

9. The fitting according to one or more of the preceding claims, **characterized in that** said half-sleeves (2, 3) have a semi-circular profile in plan view.

10. A fitting kit for corrugated pipes, **characterized in that** it comprises a fitting (1) according to one or more of the preceding claims and an additional fitting (12, 13), male or female, said additional fitting being provided with an outer circumferential recess (15).
